# EUROPEAN PATENT SPECIFICATION

(11) **EP 3 291 962 B1**
(45) Date of publication and mention of the grant of the patent: **30.12.2020**
(21) Application number: 15721672.2
(22) Date of filing: 04.05.2015
(51) Int. Cl.: B29C 49/64, B29C 49/06, B29K 67/00

(54) **INJECTION-STRETCH-BLOW-MOLDING (ISBM) MANUFACTURING METHOD OF A HOTFILL PLASTIC CONTAINER AND HOTFILLING PROCESS THEREOF**
SPRITZSTRECKBLASFORMVERFAHREN (ISBM) ZUR HERSTELLUNG EINES HEISSFÜLLKUNSTSTOFFBEHÄLTERS UND HEISSFÜLLVERFAHREN DAFÜR
PROCÉDÉ DE FABRICATION PAR MOULAGE PAR INJECTION-ÉTIREMENT-SOUFFLAGE (ISBM) D'UN RÉCIPIENT EN PLASTIQUE À REMPLISSAGE À CHAUD ET PROCESSUS DE REMPLISSAGE À CHAUD ASSOCIÉ

(43) Date of publication of application: 14.03.2018
(73) Proprietor: Société Anonyme des Eaux Minérales d'Evian et en Abrégé "S.A.E.M.E", 74500 Evian-les-Bains (FR)
(72) Inventor: BOUFFAND, Marie-Bernard, F-91767 Palaiseau Cedex (FR); LE GALL, Marion, F-91767 Palaiseau Cedex (FR)
(74) Representative: Plasseraud IP
(86) International application number: PCT/EP2015/059752
(87) International publication number: WO 2016/177396

(56) References cited:
- EP-A2- 0 251 066
- WO-A1-94/26497
- US-A- 5 250 335
- US-A1- 2010 044 928
- US-B2- 8 468 785

## Description

### Technical field

The invention relates to the injection stretch blow-molding of a thermoplastic polymer - *e.g*. polyethylene terephthalate PET-, for the manufacture of a hotfill container, preferably a bottle.

The invention pertains notably to the thermal conditioning of the preform used in the manufacture of said container, before the blow molding of said preform.

The invention also concerns the hotfill heat resistant (HR) containers obtained by said method, as well as the hotfill bottling process of these HR containers.

Documents WO94/26497A1, US8468785B2 and US2010/044928A1 are illustrative of the background art.

### Background art and technical problems

PET is a semi-crystalline thermoplastic with a glass transition temperature (Tg) of about 76°C. It means that above this temperature, the chains gain mobility in amorphous part and as a consequence, soften the material at macroscopic scale. This rubbery behavior above Tg makes it possible containers' manufacture, especially bottles, by the Injection Stretch Blow Molding (ISBM) process

In the ISBM process, the plastic is first molded into a "preform" using the injection molding process. These preforms are produced with the necks of the containers, including threads (the "finish") on one end. These preforms are packaged, and fed later (after cooling) into a reheat stretch blow molding machine, wherein the preforms are heated above their glass transition temperature, then blown using high pressure air into bottles using metal blow molds. The blowing device includes a blowpipe which injects pressurized air inside the preform to expand it and to fit the mold. The blowpipe also participates to the stretching by leaning and pressing on the bottom of preform during stretching and blowing.

Moreover, Hot Filling is a well-known sterilization method consisting in:
- heating a high -acid (pH-4.6) liquid, to temperatures in the region of 90-95 °C for at least 15 s (typically 15-30s);
- holding it at these temperatures for approximately 2-3 min;
- cooling and filling it at temperatures ranging 82-85°C into containers;
- closing sealingly and immediately said filled containers, which are preferably laid down on their sides so that the neck-finish and closure are also sterilized;
- cooling the containers to prevent thermal degradation of the liquid.

With this Tg of about 76°C, PET is initially unsuitable as a bottle polymer material for a hot-filling process above this temperature, where softened PET is less resistant to deformations that may occur, namely:
1. shrinkage and
2. collapse

1. The bottles shrink, since the molecules are stretched on an unstable stage (during the blowing process), named residual stress, which is released once T > Tg (T = bottle wall temperature and Tg = glass-transition temperature of the bottle plastic polymer material). This shrinkage is induced by the stretching of the amorphous part of the polymer to a conformation closer to a random coil.
   This phenomenon is particularly marked in the standard ISBM cold set process, wherein the blowing mould wall is chilled. This cool-down causes inner stresses which amplify the shrinkage at heat-up during hot-filling.
   Therefore, the standard ISBM cold set process is not adapted for the manufacture of hot fill bottles.
   It is also known that the higher is the proportion of amorphous parts in the PET, the more important is the shrinkage.
   This is why the usual practice to manufacture PET hot fill bottles by ISBM, is to heat still further the PET bottle before or after being stretched, to get a thermally induced crystallization which completes the stretch-induced cristallization. The increased crystallinity gives the PET significantly enhanced thermal stability. The heat deformation temperature (HDT) increases. These standard ISBM heat set processes, also known as "Heat resistant (HR) processes", give access to ISBM hot fill bottles.
2. The bottles collapse under the effect of the internal depression which is created during the cooling step after filling internal pressure, due to the presence of air in the headspace area of the bottles.

This collapsing can be controlled by designing, in the bottle wall, vacuum panels which compensate for the negative pressure (vacuum) produced during the cool-down period without the bottle collapsing. These vacuum panels make it possible the bottle not to deform at undesired portion, in undesired manner.

But these vacuum panels involve using more PET which burdens the economy of these PET bottles.

US8468785B2 explains that there exist two kinds of "HR process": the one-part HR process as well as the two-part HR process.

In the one-part HR conventional process, the increase of the crystallization of the biaxially oriented PET chains is obtained thanks to a high temperature of the walls of the mold.

The preform is firstly pre-heated at a temperature suitable for molecular orientation, namely between Tg and melting temperature, by an appropriate oven, *e.g* via infrared radiations emitted by IR lamps row(s), and then blowing the bottle in a heated mould (100-140 °C). Said mould is coupled with a system which blows fresh air to solidify the polymer material before removing it from the blowing mould and transfer it to the filling step. The temperature of the mould allows the crystallinity of the PET to be increased (above 30%), in order to stabilize the structure of the bottle, to avoid the shrinkage of the bottle during the hot filling.

In the two-part HR conventional process, the preform is also preheated as above described, and then is blown, and so stretched, up to a volume which is much greater than that of the bottle. Afterwards, the volume of the preheated over-blown preform is deflated by heating it beyond Tg and then blown and molded in the mold to the shape and the dimensions of the bottle to be manufactured.

US8468785B2 adds that these HR conventional processes fail because they imply supplemental, complex and expensive heat setting treatments and because they do not hinder the design of vacuum panels detrimental to the weight, the cost and the appearance of the hot fillable PET bottles.

US8468785B2 presumably overcomes these drawbacks through implementation of standard ISBM cold set process, wherein:
- the container is blow molded in a "cold" mold, unlike the "Heat Resistant" or "HR" blow-molding processes that consist in blow molding the container in a mold at high temperature;
- there is an additional step in the filling process compared to the hot-filling commonly used, said step consisting in, as the temperature of the liquid contained in the bottle has reached a temperature below 50°C, heating the container by flame treatment (1-5s/500-1000°C), which causes a rapid and reproducible shrinkage of the contracting zone which reduces the volume of the bottle;
- the container has no compensating panels and a particular bottom of petaloid or star type.

The process according to US8468785B2 comprises the heating of a preform to a temperature, close to the crystallization (110° C). The preform is then stretched and blow molded in the cavity of a mold, the walls of which are cooled or tempered at a temperature below the PET Tg. The part of the mold that forms the base of the bottle is preferably cooled at a temperature below 20° C.

It appears that the process according to US8468785B2 does not cancel all the constraints of the ISBM manufacture in terms of thermal regulation: a controlled heating of the preform is always necessary and a cooling of the mold is recommended. It is not as simple as announced in the preamble of US8468785B2.

But, above all, this US8468785B2's process sets a flame treatment of the contracting zone, during the filling. This is cumbersome, costly and tricky even dangerous, in an industrial line.

Finally, it also appears that the hot fill resistance of the bottles manufactured by the US8468785B2's process, could be improved.

### Objectives of the invention

In this context, the invention aims at addressing at least one of the above problems and/or needs, through fulfilling at least one of the following objectives:
- a- Providing an improved Injection-Stretch-Blow-Molding (ISBM) manufacturing method of a hotfill plastic container which is a heat set process making it possible to increase the crystallinity of the bottle without heating the blow-molding mold and/or without impairing or impacting the hot fill process cost effective and which is easy to manufacture at an industrial scale.
- b- Providing an improved Injection-Stretch-Blow-Molding (ISBM) manufacturing method of a hotfill plastic container which is a heat set process making it possible to increase the crystallinity of the bottle without heating the blow-molding mold.
- c- Providing an improved Injection-Stretch-Blow-Molding (ISBM) manufacturing method of a hotfill plastic container which is a heat set process making it possible to increase the crystallinity of the bottle.
- d- Providing an improved Injection-Stretch-Blow-Molding (ISBM) manufacturing method of a hotfill plastic container which is a heat set process making it possible to increase the crystallinity of the bottle, in a simple and cost effective way.
- e- Providing an improved Injection-Stretch-Blow-Molding (ISBM) manufacturing method of a hotfill plastic container which is a heat set process making it possible to increase the crystallinity of the bottle, to at least 27%, preferably 30%, 32%, 33%.
- f- Providing a new preform as intermediary product in the above mentioned improved Injection-Stretch-Blow-Molding (ISBM) manufacturing method of a hotfill plastic container.
- g- Providing a hot fill process of a plastic containers obtained by the above mentioned improved Injection-Stretch-Blow-Molding (ISBM) manufacturing method, said process making it possible to produce non deformed and shock-resistant filled plastic containers.

### Brief description of the invention

The above objectives, among others, are fulfilled by the present invention which concerns, in a first aspect, an Injection-Stretch-Blow-Molding (ISBM) manufacturing method of a hotfill plastic container, made from a polymer material -preferably a PET-having a crystallization temperature Tc and a glass-transition temperature Tg, said method comprising the steps of:
(a) Providing a plastic preform comprising a neck end, a neck support ring, and a closed tubular body portion which is defined by a wall with an external face and an internal face;
(b) Heating the preform;
(c) Blow molding the preform in a cavity of a mold so as to form a container;
(d) Demolding the moulded container;
wherein:
I. the external face and the internal face of the wall of the closed tubular body portion of the plastic preform, have, respectively, an external Te and an internal Ti temperature;
II. the heating (b) of the preform is carried out in such way that:
   - Ti > Te while entering the mold;
   - Ti & Te ≥ Tg at least just before entering the mold and during at least -in % of the duration between the beginning of the heating (b) and the entering into the mold, said % being given hereafter in an increasing order of preference- 30 ; 40 ; 50 ; 60 ; 70 ;
   - Tg ≤ Ti ≤ Tc ; preferably Tg + 10°C ≤ Ti ≤ Tc; and more preferably Tg + 10°C ≤ Ti ≤ Tc before Tg + 10°C ≤ Te ≤ Tc;
III. at least a part of the said mold has a T_{M} temperature ≤ Tg at least during a part of the blow molding (c);
IV. T_{M} is maintained constant at least during a part of the blow molding (c).

It has been surprisingly found that it is possible to manufacture by ISBM a Heat Resistant plastic -preferably PET- container (*e.g* bottle) with a cold mould, providing a particular thermal conditioning of the preform before the blow molding to increase its crystallinity.
The so obtained containers (*e.g*. bottles) better withstand the deformations when filled with hot content.

In embodiments, the method of the invention may comprise one or several of the following features.

The method according to the invention preferably includes at least one additional step (S) of heat diffusion and heat stabilization in the preform wall, the heating of said preform being stopped during this additional step (S).

Said at least one additional step (S) of heat diffusion and heat stabilization in the preform wall is preferably carried out after the heating step (b) and before the entry into the mold, for the blow-molding step (c).

A specific effect of the thermal conditioning according the invention is the transformation of the macro molecular structure of the preform : after the heating (b) and before the blow molding (c), the preform comprises an inner skin on at least a part of the inner face of the wall, said inner skin being more opaque than the core of the wall, said wall also presenting, preferably, on at least a part of its outer face, an outer skin which is more opaque than the core of the wall.
This opacification of the inner superficial layer of the preform reflects the crystallization of the inner side of the preform wall. It is of the inventors' merits to point out the importance of the heating of the inner face of the preform wall, with regards to the supply of the required thermal resistance for hotfill plastic -preferably PET- containers (*e.g*.bottles). The inner skin (preferably inner and outer skin) structure is particularly visible on a right cross section of the preform as shown in the following examples.

According to a possible embodiment of the invention, the heating step (b) is implemented by exposing at least the outer face of the preform to at least one heat source, preferably to at least one InfraRed (IR) lamp.

According to a preferred embodiment of the invention, the method comprises a 1^{st} heating step (b1), a heat diffusion & heat stabilization step (S) and a 2^{nd} heating step (b2).

In an advantageous mode of this preferred embodiment:
the 1^{st} heating step (b1) is performed with at least one IR lamp, said IR lamp(s) emitting Near IR beams;
the 2^{nd} heating step (b2) is performed with at least one IR lamp, said IR lamp(s) emitting Mid IR beams.

According to the invention:
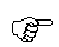 Near IR advantageously correspond to wavelengths λn in µm defined as follows: $0.7 < λ n < 3$
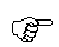 According to the invention, Mid IR advantageously correspond to wavelengths λm in µm defined as follows: $3 \leq λ m < 25$

In a noteworthy variant of this preferred embodiment, the method comprises at least another supplemental heat diffusion & heat stabilization step (S') before the blow molding step (d).

One of the key issues of the method according to the invention, is to have found the thermal conditions to manufacture, without restrictive steps in the blow molding as well as in the hotfilling, a molded container which crystallinity is of at least, in an increased order of preference 27%, 28%, 29%, and more preferably comprised between 30 and 38 %.

The method according to the invention is preferably a continuous method.

An intermediary product is obtained in of the above aimed ISBM manufacturing method.
This intermediary product is present, after the heating (b) and before the blow molding (c), and consists in a preform made of a polymer material -preferably a PolyEthyleneTerephtalate (PET) and comprising an inner skin on at least a part of the inner face of the wall, said inner skin being more opaque than the core of the wall, said wall also presenting, preferably, on at least a part of its outer face, an outer skin which is more opaque than the core of the wall.

Advantageously, said intermediary product is issued from a heating (b) of the preform in such way that:
- Ti > Te while entering the mold;
- Ti & Te ≥ Tg at least just before entering the mold and during at least -in % of the duration between the beginning of the heating (b) and the entering into the mold, said % being given hereafter in an increasing order of preference- 30 ; 40 ; 50 ; 60 ; 70 ;
- Tg ≤ Ti ≤ Tc ; preferably Tg + 10°C ≤ Ti ≤ Tc; and more preferably Tg + 10°C ≤ Ti ≤ Tc before Tg + 10°C ≤ Te ≤ Tc;
wherein:
Ti , Te are respectively the external Te and the internal Ti temperature of the external face and of the internal face of the wall of the closed tubular body portion of the plastic preform,
Tc, Tg are respectively the crystallization temperature and the glass-transition temperature of the polymer material of the preform.

An hotfilling process of the hotfill plastic -preferably PET- container (e.g. bottle) obtained in the above mentioned method is described. Said hotfilling method consists essentially in filling the container with a liquid at a temperature comprised between 80 °C and 95 °C.

An hotfill plastic -preferably PET-container (*e.g*. bottle) filled by the above mentioned hotfilling process is described, said container being characterized by an ovalization lower than 2% and more preferably lower than 1% and more preferably lower than 0.5%.

Preferably, this hotfill plastic container is filled with a still beverage.

A hotfill plastic -preferably PET- container filled by the above mentioned hotfilling process, does not require any particular form in order to be heat resistant. The container is notably not a container which bottom is of petaloid or star type.

### Detailed description of the invention

Further objects and advantages of the invention will emerge from the following disclosure of particular embodiments of the invention given as non-limitative examples, the disclosure being made in reference to the enclosed drawings in which:
- Figure 1 is a side view with a partial longitudinal section through its axis A of the preform implemented in the method according to the invention.
- Figure 2A is a side view of a bottle obtained from the preform of Figure 1.
- Figure 2B is a bottom view of Figure 2A.
- Figure 3 is a scheme of the means and the blow molding device used in the ISBM method according to the invention.
- Figures 4.1 & 4.2 are two pictures of the preform cross-sections according tp trials 1 & 2 respectively.
- Figure 5 are graphs of the internal temperatures Ti and external temperatures Te (°C) of the preform wall, in function of the height (mm) of a straight part of the preform.

On the Figures, the same reference numbers refer to the same or similar elements.

### The ISBM manufacturing method

One of the advantages of the invention is that it does not change drastically the standard high productivity industrial ISBM method.

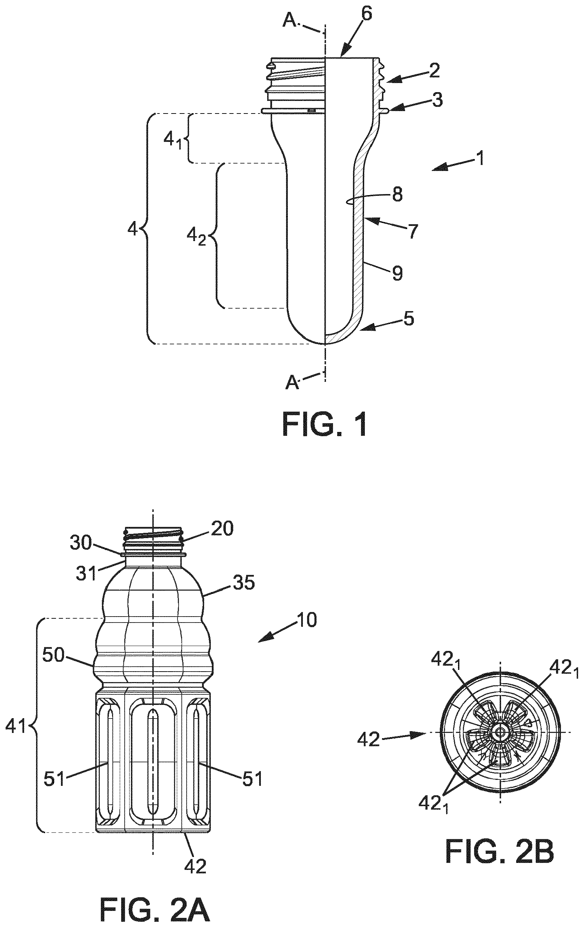

Step (a): The preform is formed by injection molding and presents a conventional structure as shown in figure 1. Said preform 1 of axis A is made of at least one thermoplastic polymer -preferably PET- and comprises from the top to the bottom:
- a neck end 2;
- a neck support ring 3;
- and a closed tubular body portion 4.

The neck end 2 and the neck support ring 3 form together the neck finish. The preform 1 is a hollow tube extending along an axis A and having a closed bottom end 5 and an opened top end 6. The top portion of the preform 1 close to the opened top end 6 and which is composed of the neck end 2 and of the neck support ring 3, does not undergo any transformations during the shaping of the bottle 10 by stretch blow-molding. So, the neck end 2 and of the neck support ring 3 correspond to the neck end 20 and to the neck support ring 30 of the bottle 10 as shown on figure 2. The remaining portion of the tube is the closed tubular body portion 4 which comprises a transition zone 4₁ between the neck support ring 3 and the closed tubular portion 4 and a straight part 4₂ just below the transition zone 4₁ to the curved bottom 5. Said straight part 4₂ has a circular cross section, the external diameter of which can be steady, decreasing and/or increasing on at least one segment of the straight part 4₁ of the closed tubular body 4. In this example, the thickness of the wall 7 of the straight part 4₁ is steady. Said wall 7 presents an inner face 8 and an outer face 9.

The plastic polymer which is molded to obtain this preform 1 is preferably a commercial PET, which intrinsic viscosity is comprised between 0.70 and 0.95, for example equal to 0.84.

The injection device is a conventional one. For instance, Netstal Elion 800.

Step (b): The heating of the preform is done by any appropriated heating means. In the conventional ISBM devices, these means are *e.g.* ovens. Preferably, each oven is composed of several IR lamps which form rows. There can be a lamps row facing a reflector which defines together a passing way through which the preforms are conveyed towards the blow molding device.

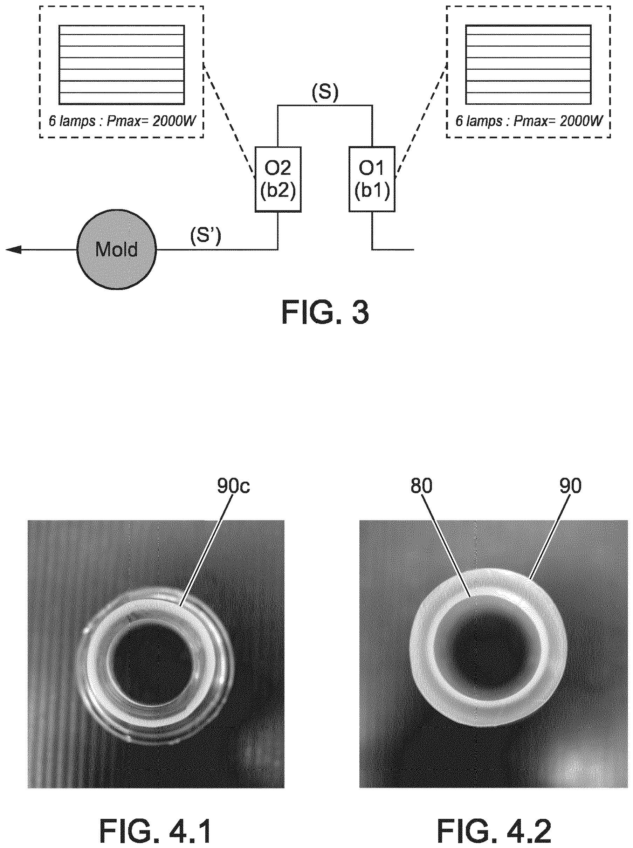

As shown on FIG.3, in a preferred embodiment, the heating means include 2 ovens O1 & O2. Each oven 01,02 comprises 6 IR lamps which can be independently lighted. A lighted lamp can deliver a maximum power of 2000W. The wavelength of the radiation changes with the power of the lamps. A High power (80-100% of the lamp capacity) is equivalent to a small wavelength (NIR). Therefore, if the lamp is lighted at high power, the radiations go through the volume of the preform, and, crystallize its inner surface. On the opposite, if the lamp is lighted at low power (50% of lamp capacity), it crystallizes the outer surface of the preform, assuming the absorption of the IR (MIR) beams occurs mostly on the volume next to the outer surface.

The preforms are brought to the mold by a conveyor chain which goes through the oven O1 and the oven O2, which follow one another and which are away from each other in order to set a heat diffusion and stabilization time.

For example, Te & Ti are raised to above 100°C (usually, between 105 and 120°C).

The crystallization temperature Tc and the glass transition temperature Tg of the polymer material -preferably PET- are preferably those measured by differential scanning calorimetry according to Norm ISO 11357_3.

Ti & Te are for example both measured in the straight part 4₂ of the closed tubular body portion 4 of the preform. Practically, the measurement of reference Ti & Te is done in the middle area (*e.g*. middle +/- 20%, preferably 10%) of the length of the straight part 4₂, preferably at the same level for reference Ti and Te. The thermometer can be a THERMOscan 3.3 from the company BMT (Blow Molding Technologies).

Step (S): As above mentioned, the heat diffusion and heat stabilization in the preform, is advantageously carried out through interrupting the heating (b). In the preferred embodiment, it corresponds to the periods wherein the preform is between O1 and O2 and between O2 and the blow mold, namely at the ambient temperature which is necessarily lower than the ovens' temperature. It allows the heat to diffuse through the preform thickness, and raise the temperature in the middle of the preform up to approximately 90°C.

Step (c): After this specific thermic conditioning, the preform's blow molding occurs in a mold which temperature T_{M} is lower than Tg.

Said temperature T_{M} is for instance measured with an IR thermometer (TESTO 830-T4 from the company TESTO). The probe of the thermometer is introduced into the cavity of the mold, approximatively at the upper part of the mold.

The mold is possibly cooled by cooling means (*e.g* circulation of a refrigerating fluid into the mold walls), in order to regulate T_{M} below a given value.

According to an important feature of the invention's method, T_{M} is maintained constant during at least a part of the molding, preferably all along the molding step (c) and more generally all along the industrial continuous manufacturing ISBM method.

According to a remarkable mode of implementation, the preforms are in rotation around their own axis A as they are conveyed through the ISBM device for manufacturing the heat resistant hotfill containers (*e.g*. bottles). It makes it possible to homogeneously pre-heat them in order to reach a cylindrical heating symmetry.

Step (d): The demolding step is a conventional one. The demolded container (*e.g*. bottle) 10 obtained by stretch blow molding of the injection molded preform 1, is represented on figures 2 & 2A. Said bottle 10 is suitable for containing for example a liquid such as water. The bottle 10 of circular cross section, comprises:
▪ a neck 20
▪ a neck support ring 30
▪ a neck extension 31
▪ a shoulder 35
▪ a tubular body portion 41, the wall of which is designated by the reference 50 and includes imprints 51
▪ and a bottom 42 including radial grooves 42₁

This bottle has a crystallinity preferably comprised between 30 and 38 %.

The crystallinity of this blown bottle is for example measured with an electronic densimeter, as detailed hereafter in the examples.

Although the invention has been disclosed with a cylindrical bottle comprising several grooves as imprints, the invention is not limited thereto. In particular, the bottle could be of any other suitable shape, such as cylindrical or elliptic, polygonal or other cross-section. Besides, the envelop could be provided with one or several imprints consisting in a local deformation in recess, as previously disclosed in relation with grooves, or in a local deformation in relief, i.e. protruding, with respect to the two adjacent portions. Thus, the imprint could be of any kind, especially selected from the group consisting of splines, grooves, ribs, embossings, decorative patterns, gripping elements, trademark indications, production indications, Braille characters and a combination thereof.

### Hotfilling process

The invention may further comprise a step of filling the container (*e.g* bottle) with a hot content, especially at a temperature (°C) greater than or equal to 80, preferably comprised in the following ranges listed in an increased order of preference: [80-98] ; [83-92] ; [83-85].

This hotfilling can be conventionally implemented at an industrial speed, without any restrictive additional step.

The containers (*e.g*. bottles) are resistant to deformation and their mechanical and food properties are not impaired by the hotfilling.

The liquid that can be filled in the bottles is preferably a still beverage, and can be for example:
· water.
· a sugar containing beverage, such as a soda for example a fruit juice, optionally mixed with water in suitable proportions.
· a vitamin beverage or an energy drink, optionally aromatized and optionally preservative free.
· an alcoholic beverage.
· a milk based product such as milk or drinking dairy fermented products such as yogurt.

The bottle, filled or empty, can be closed by a closure, for example a cap.

### Examples

### Materials

PET: A Heat-set PET (Intrinsic Viscosity measured following the standard ASTM D5225= 0.82) with the following features:
- crystallization temperature Tc* = 134°C,
- glass transition temperature, Tg* = 83°C,
- melting temperature, Tf = 249°C,
* Tg and Tc are measured according to Norm ISO 11357_3

### Manufacture of the preform

The blow molding method implements a 29.5 g preform 1 (FIG.1) made of the above defined thermoplastic polymer PET.

This preform is injected in a Netstal Elion 800 injection molding machine.

### Manufacturing method of the bottle 10 (FIG.2A & 2B)

The bottles are manufactured continuously by a blow molding process implementing a mold, such as a 1-Blow XL0 HF machine(as illustrated in figure 3), having a cavity comprising one or several imprinting members, and a blowing device adapted to supply the cavity with a fluid at a blowing pressure.

The comparative PET preforms 1 of the trial 1 are heated in a sole oven O1 according to the conditions in table 1 below.

The PET preforms 1 of the trial 2 which are manufactured according to the invention are heated by a first oven O1 and a second oven O2 {steps (b1 & b2)}, a first diffusion & stabilization step (S) is inserted between the two heating steps (b1 & b2) and a second diffusion & stabilization step (S') is inserted between the 2^{nd} heating step (b2) and the blow molding step (c).

These features appear on the scheme of FIG.3. In this example, the 1^{st} heating step (b1) corresponds to a heat penetration time = 16.75 sec, the first diffusion & stabilization step (S) corresponds to a stabilization time = 20.1 sec, the 2^{nd} heating step (b2) corresponds to a heat distribution time = 16.75 sec, and the 2^{nd} diffusion & stabilization step (S') corresponds to a stabilization time = 16.75 sec.

**Table 1: Trials conditions**

| | **Trial 1** | **Trial 2** | |
|---|---|---|---|
| **Mold Temperature** | 130 °C | 17 °C | |
| **Drawing rod type** | With cold air blowing | Without cold air blowing | |
| **Ovens** | O₁ | O₁ + O₂ | |
| **Ovens description** | | O₁ | O₂ |
| **IR type** | MIR | NIR | MIR |
| **Number of lighted lamps** | 6 | 3 | 5 |
| **Ventilation** | 40% | 0% | 75 % |

After the PET preforms 1 have been placed in the mold at a temperature T_{M} (Tm = 130°C trial 1; T_{M} = 17°C trial 2), the preforms 1 can be blown through injection of the fluid at the blowing pressure within the preform through the opened top end, by means of a blowpipe. In particular, the preforms 1 were blown to bottles 10 of the above disclosed type, namely 0.6L bottles.

The blowing pressure can be equal to 30-32 bars. The PET preforms 1 were transformed into bottles 10 by the same stretch blow molded process.

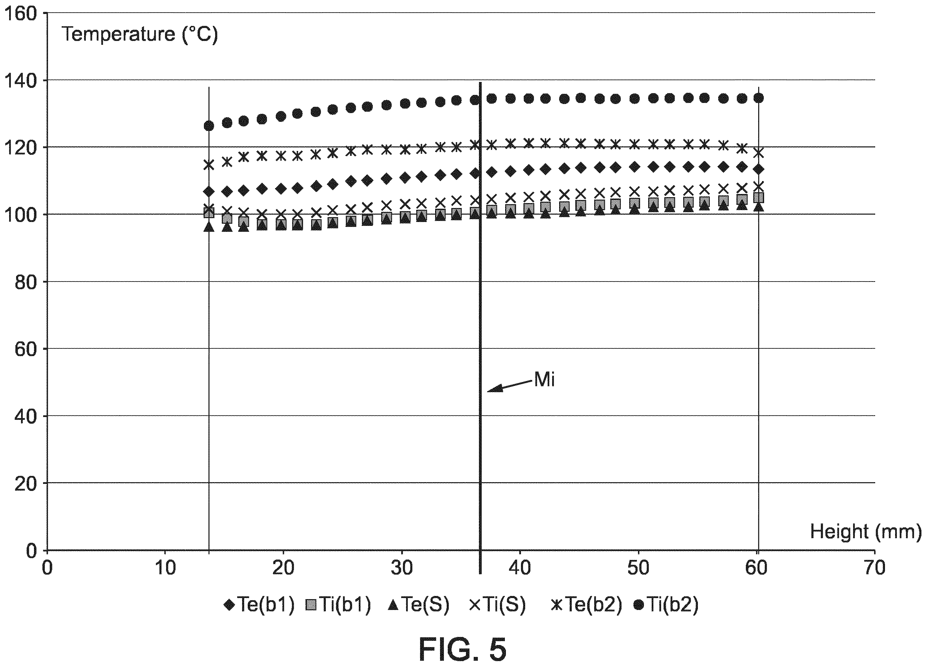

Figure 5 shows graphs of the internal temperatures Ti and external temperatures Te (°C) of the preform wall during the heating steps (b1) & (b2) the heat diffusion and heat stabilization step (S) of the method according to the examples, in function of the length/height (mm) of the straight part 4₂ of the closed tubular body portion 4 of the preform 1.
Te(b1) & Ti(b1) are measured as the preforms go out of the oven O1 [end of step (b1)].
Te(S) & Ti(S) are measured as the preforms go into the oven O2 [end of step (S)].
Te(b2) & Ti(b2) are measured as the preforms go out of the oven O2 [end of step (b2)].

The thermal parameters of this manufacturing example arc the followings:
- Ti = 133°C > Te = 120°C while entering the mold, at the end of the second diffusion & stabilization step (S');
- Ti & Te ≥ Tg = 83°C; 16s after the beginning of the heating step (b1). The whole duration of the heating steps (b1) & (b2) and of the heat diffusion and heat stabilization steps (S) & (S') is 70.35 s. So, Ti & Te ≥ Tg = 83°C, during [70.35-16 = 54.35/70.35]x100 = 77.25% of the whole duration of the steps (b1) (b2) (S) 'S'), between the beginning of the heating (b) and the entering into the mold.
- Tg= 83°C ≤ Ti ≤ Tc =134°C; Tg + 10°C = 93°C ≤ Ti ≤ Tc=134°C.
- The time Tg + 10°C = 93°C ≤ Ti ≤ Tc=134°C, is before Tg + 10°C ≤ Te ≤ Tc.

The Ti and Te temperatures which are above given are the reference Ti and Te of the wall of the preform measured in the middle Mi of the length/height of the straight part 4₂ of the closed tubular body portion 4 of the preform 1 (see FIG.5).

### Tests

- Visual observations:
   - On preform: A group of 10 preforms is heated with oven(s) O1/O2 (depending on the trial conditions), all of them are blown except one in the middle of the group which is rejected after the mold without being blown. This preform is placed in a cold water bath and crosswise cut by half, and the cross sections of the preform are observed.
   - On bottle: After being filled, the bottle is visually checked (panels stability, good bottle footprint)
- Crystallinity:
   The crystallinity of a blown bottle is measured with an electronic densimeter (Reference: Mettler Toledo XS64) following the method described below.

A 2 x 2 cm sample is cut from the body of the bottle, the density of the sample is measured with the densimeter and, the crystallinity is deduced, using the following formula: ${x}_{c} = \frac{d - {d}_{a}}{{d}_{c} - {d}_{a}}$

With: d_{c}(PET) = 1.455 and dₐ(PET) = 1.335
- Hot filling:
   Bottles are filled at 84°C, successively kept vertically and horizontally before being refreshed under a 10°C shower.
- Ovalisation:
   The ovalisation of a bottle is evaluated by measuring the external dimensions of the analysed bottle on the shoulder area. Using for example a GAWIS OD 9500 equipment from AGR Topwave company, both minimum and maximum diameters are evaluated and ovalisation is calculated using the following formula: $Ovalisation = \frac{{d}_{max} - {d}_{min}}{{d}_{average}} ∗ 100$
   *With: dₘₐₓ: the maximum diameter*
   *dₘᵢₙ: the minimum diameter*
   *d_{average}: the average diameter*

If the bottle is really round, dₘₐₓ=dₘᵢₙ and ovalization is equal to zero.

*Results*

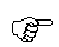 Visual results:

### • On preform:

It appears from FIG. 4.1 & 4.2, that the preform from the trial 1 (FIG. 4.1) is only crystallized on the external part of the preform wall 7 (white/opaque outer skin 90c) whereas the preform from the trial 2 is crystallized on both sides of the preform wall 7 (white/opaque outer 90 and inner 80 skins).

### • On bottles 10:

No difference (panels and bottle footprint) is observed between a bottle blown in trial 1 and a bottle 10 from the trial 2.

The bottle's volume is bigger in trial 2 (648 mL) than the one from trial 1 (622 mL), as the bottle is blown in a cold mold.

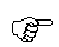 Crystallinity:

As shown in the table 2 below, there is no significant difference of crystallinity between bottles from trial 1 and bottles 10 from trial 2.

**Table 2: Average of the crystallinity between the 2 processes**

| | **Trial 1** | **Trial 2** |
|---|---|---|
| Crystallinity (%) | 30 | 32 |

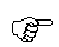 Ovalization:

Surprisingly, the colder is the mould, the lower is the ovalization effect.

| | Trial 1 | Trial 2 |
|---|---|---|
| Ovalisation | 2.72% | 0.91% |

## Claims

1. An Injection-Stretch-Blow-Molding (ISBM) manufacturing method of a hotfill plastic container, made from a polymer material -preferably a PolyEthyleneTerephtalate (PET)- having a crystallization temperature Tc and a glass-transition temperature Tg, said method comprising the steps of:
(a) Providing a plastic preform comprising a neck end, a neck support ring, and a closed tubular body portion which is defined by a wall with an external face and an internal face;
(b) Heating the preform;
(c) Blow molding the preform in a cavity of a mold so as to form a container;
(d) Demolding the moulded container.
wherein:
I. the external face and the internal face of the wall of the closed tubular body portion of the plastic preform, have, respectively, an external Te and an internal Ti temperature;
II. the heating (b) of the preform is carried out in such way that:
• Ti > Te while entering the mold;
• Ti & Te ≥ Tg at least just before entering the mold and during at least -in % of the duration between the beginning of the heating (b) and the entering into the mold, said % being given hereafter in an increasing order of preference- 30 ; 40 ; 50 ; 60 ; 70;
• Tg ≤ Ti ≤ Tc ; preferably Tg + 10°C ≤ Ti ≤ Tc; and more preferably Tg + 10°C ≤ Ti ≤ Tc before Tg + 10°C ≤ Te ≤ Tc;
III. at least a part of the said mold has a T_{M} temperature ≤ Tg at least during a part of the blow molding (c);
IV. T_{M} is maintained constant at least during a part of the blow molding (c).

2. A method according to claim 1 including at least one additional step (S) of heat diffusion and heat stabilization in the preform wall, the heating of said preform being stopped during this additional step (S).

3. A method according to claim 1 wherein, after the heating (b) and before the blow molding (c), the preform comprises an inner skin on at least a part of the inner face of the wall, said inner skin being more opaque than the core of the wall, said wall also presenting, preferably, on at least a part of its outer face, an outer skin which is more opaque than the core of the wall.

4. A method according to claim 1 wherein the heating step (b) is implemented by exposing at least the outer face of the preform to at least one heat source, preferably to at least one InfraRed (IR) lamp.

5. A method according to claim 1 comprising a 1^{st} heating step (b1), a heat diffusion & heat stabilization step (S) and a 2^{nd} heating step (b2).

6. A method according to claim 5 wherein:
the 1^{st} heating step (b1) is performed with at least one IR lamp, said IR lamp(s) emitting Near IR beams;
the 2^{nd} heating step (b2) is performed with at least one IR lamp, said IR lamp(s) emitting Mid IR beams.

7. A method according to claim 5 or 6 comprising at least another supplemental heat diffusion & heat stabilization step (S') before the blow molding step (d).

8. A method according to at least one of the preceding claims, wherein the molded container has a crystallinity of at least, in an increased order of preference 27%, 28%, 29%, and more preferably comprised between 30 and 38 %.

## Patentansprüche

1. Ein Spritzstreckblasform-Herstellungsverfahren eines Heißfüll-Kunststoffbehälters, hergestellt aus einem Polymermaterial - vorzugsweise einem Polyethylentherephtalat (PET) - mit einer Kristallisationstemperatur Tc und einer Glasübergangstemperatur Tg, wobei das Verfahren die folgenden Schritte umfasst
(a) Bereitstellen einer Kunststoffvorform, die ein Halsende, einen Halsstützring und einen geschlossenen rohrförmigen Körperabschnitt umfasst, der durch eine Wand mit einer Außenfläche und einer Innenfläche definiert ist;
(b) Erwärmen der Vorform;
(c) Blasformen der Vorform in einem Hohlraum einer Form, um so einen Behälter zu formen;
(d) Entformen des geformten Behälters.
wobei:
I. die Außenfläche und die Innenfläche der Wand des geschlossenen rohrförmigen Körperteils des Kunststoff-Vorformlings eine äußere Te-Temperatur bzw. eine innere Ti-Temperatur aufweisen;
II. das Erwärmen (b) der Vorform so durchgeführt wird, dass
• Ti > Te beim Eintritt in die Form;
• Ti & Te ≥ Tg mindestens kurz vor dem Eintritt in die Form und während mindestens -in % der Zeitspanne zwischen dem Beginn des Erwärmens (b) und dem Eintritt in die Form, wobei diese % nachfolgend in aufsteigender Reihenfolge der Präferenz angegeben werden - 30 ; 40 ; 50 ; 60 ; 70;
• Tg ≤ Ti ≤ Tc ; vorzugsweise Tg + 10°C ≤ Ti ≤ Tc; und noch bevorzugter Tg + 10°C ≤ Ti ≤ Tc vor Tg + 10°C ≤ Te ≤ Tc;
III. mindestens ein Teil der genannten Form eine T_{M}-Temperatur aufweist ≤ Tg mindestens während eines Teils des Blasformens (c);
IV. T_{M} zumindest während eines Teils des Blasformens konstant gehalten wird (c).

2. Verfahren nach Anspruch 1 mit mindestens einem zusätzlichen Schritt (S) der Wärmediffusion und Wärmestabilisierung in der Wand der Vorform, wobei die Erwärmung der Vorform während dieses zusätzlichen Schritts (S) gestoppt wird.

3. Verfahren nach Anspruch 1, bei dem die Vorform nach dem Erwärmen (b) und vor dem Blasformen (c) eine Innenhaut auf mindestens einem Teil der Innenfläche der Wand aufweist, wobei die Innenhaut opaker ist als der Kern der Wand, wobei die Wand ebenfalls eine Innenhaut aufweist, vorzugsweise, zumindest auf einem Teil seiner Außenfläche, eine Außenhaut, die opaker ist als der Kern der Wand.

4. Verfahren nach Anspruch 1, wobei der Erwärmungsschritt (b) durchgeführt wird, indem mindestens die Außenfläche der Vorform mindestens einer Wärmequelle, vorzugsweise mindestens einer Infrarotlampe (IR-Lampe), ausgesetzt wird.

5. Verfahren nach Anspruch 1, umfassend einen ersten Erwärmungsschritt (b1), einen Wärmediffusions- und Wärmestabilisierungsschritt (S) und einen zweiten Erwärmungsschritt (b2).

6. Verfahren nach Anspruch 5, wobei:
• der 1. Erwärmungsschritt (b1) wird mit mindestens einer IR-Lampe durchgeführt, wobei die IR-Lampe(n) Nah-IR-Strahlen emittieren;
• der 2. Erwärmungsschritt (b2) wird mit mindestens einer IR-Lampe durchgeführt, wobei die IR-Lampe(n) mittlere IR-Strahlen emittieren.

7. Verfahren nach Anspruch 5 oder 6, umfassend mindestens einen weiteren zusätzlichen Wärmediffusions- und Wärmestabilisierungsschritt (S') vor dem Blasformschritt (d).

8. Verfahren gemäß mindestens einem der vorstehenden Ansprüche, wobei der geformte Behälter eine Kristallinität von mindestens, in einer erhöhten Reihenfolge der Präferenz 27%, 28%, 29% und bevorzugter zwischen 30 und 38% aufweist.

## Revendications

1. Procédé de fabrication par moulage par injection et étirage-soufflage (ISBM) d'un contenant en plastique de remplissage à chaud, constitué d'un matériau de polymère, de préférence un polytérephtalate d'éthylène (PET), ayant une température de cristallisation Tc et une température de transition vitreuse Tg, ledit procédé comprenant les étapes consistant à :
(a) fournir une préforme en plastique comprenant une extrémité de col, une bague de support de col, et une portion de corps tubulaire fermé qui est définie par une paroi avec une face externe et une face interne ;
(b) chauffer la préforme ;
(c) mouler par soufflage la préforme dans une cavité d'un moule de façon à former un contenant ;
(d) démouler le contenant moulé,
dans lequel :
I. la face externe et la face interne de la paroi de la portion de corps tubulaire fermé de la préforme en plastique ont, respectivement, une température externe Te et une température interne Ti ;
II. le chauffage (b) de la préforme est réalisé de telle sorte que :
- Ti > Te lors de l'entrée dans le moule ;
- Ti & Te ≥ Tg au moins juste avant l'entrée dans le moule et durant au moins - en % de la durée entre le début du chauffage (b) et l'entrée dans le moule, ledit % étant donné ci-après dans un ordre croissant de préférence - 30 ; 40 ; 50 ; 60 ; 70 ;
- Tg ≤ Ti ≤ Tc; de préférence Tg + 10 °C ≤ Ti ≤ Tc ; et de manière davantage préférée Tg + 10 °C ≤ Ti ≤ Tc avant Tg + 10 °C ≤ Te ≤ Tc ;
III. au moins une partie dudit moule a une température T_{M} ≤ Tg au moins durant une partie du moulage par soufflage (c) ;
IV. T_{M} est maintenue constante au moins durant une partie du moulage par soufflage (c).

2. Procédé selon la revendication 1 comportant au moins une étape supplémentaire (S) de diffusion de chaleur et de stabilisation de chaleur dans la paroi de préforme, le chauffage de ladite préforme étant interrompu durant cette étape supplémentaire (S).

3. Procédé selon la revendication 1 dans lequel, après le chauffage (b) et avant le moulage par soufflage (c), la préforme comprend une peau interne sur au moins une partie de la face interne de la paroi, ladite peau interne étant plus opaque que l'âme de la paroi, ladite paroi présentant également, de préférence, sur au moins une partie de sa face externe, une peau externe qui est plus opaque que l'âme de la paroi.

4. Procédé selon la revendication 1, dans lequel l'étape de chauffage (b) est mise en œuvre par l'exposition d'au moins la face externe de la préforme à au moins une source de chaleur, de préférence à au moins une lampe infrarouge (IR).

5. Procédé selon la revendication 1 comprenant une 1^{ère} étape de chauffage (b1), une étape de diffusion de chaleur et de stabilisation de chaleur (S) et une 2^{nde} étape de chauffage (b2).

6. Procédé selon la revendication 5, dans lequel :
• la 1^{ère} étape de chauffage (b1) est réalisée avec au moins une lampe IR, ladite (lesdites) lampe(s) IR émettant des faisceaux de proche IR ;
• la 2^{nde} étape de chauffage (b2) est réalisée avec au moins une lampe IR, ladite (lesdites) lampe(s) IR émettant des faisceaux d'IR moyen.

7. Procédé selon la revendication 5 ou 6, comprenant au moins une autre étape complémentaire de diffusion de chaleur et de stabilisation de chaleur (S') avant l'étape de moulage par soufflage (d).

8. Procédé selon au moins l'une des revendications précédentes, dans lequel le contenant moulé a une cristallinité d'au moins, dans un ordre croissant de préférence 27 %, 28 %, 29 %, et de manière davantage préférée comprise entre 30 et 38 %.
